# FASCICULE DE BREVET EUROPEEN

(11) **EP 3 723 068 B1**
(45) Date de publication et mention de la délivrance du brevet: **13.07.2022**
(21) Numéro de dépôt: 20158871.2
(22) Date de dépôt: 21.02.2020
(51) Int. Cl.: G09B 23/28

(54) **THORAX ET MANNEQUIN POUR RÉANIMATION CARDIO-PULMONAIRE AVEC APPORT DE CO2 GAZEUX**
THORAX UND TRAININGSPUPPE FÜR DIE KARDIOPULMONALE REANIMATION UNTER ZUFÜHRUNG VON GASFÖRMIGEM CO2
THORAX AND MANNEQUIN FOR CARDIOPULMONARY RESUSCITATION WITH ADDITION OF GASEOUS CO2

(30) Priorité: 12.04.2019 FR 1903946
(43) Date de publication de la demande: 14.10.2020
(73) Titulaire: Air Liquide Medical Systems, 92160 Antony (FR)
(72) Inventeur: BADAT, Bilal, 92182 Antony (FR); RICHARD, Jean-Christophe, 92182 Antony (FR); HANNOUCENE, Manon, 92182 Antony (FR)
(74) Mandataire: Air Liquide

(56) Documents cités:
- WO-A1-2010/131143
- WO-A1-2012/155283
- US-A- 5 312 259
- US-A1- 2017 156 978

## Description

L'invention porte sur un thorax artificiel pour mannequin de réanimation utilisable notamment lors d'une séance de formation et/ou d'une démonstration de réanimation cardio-pulmonaire (RCP) avec mise en œuvre de compressions thoraciques successives, et un mannequin de forme humaine comprenant un thorax artificiel.

De nombreuses personnes sont victimes chaque année d'un arrêt cardiaque et beaucoup en décèdent car elles ne sont pas prises en charge rapidement. Pour augmenter leurs chances de survie, il est recommandé de pratiquer sur elles un massage cardiaque de qualité.

Selon les recommandations internationales de l'ERC (European Resuscitation Council), une RCP de qualité doit remplir plusieurs critères, à savoir :
- des compressions thoraciques (CT) ayant une profondeur de 5 à 6 cm environ,
- une fréquence de CT comprise entre 100 et 120 compressions par minute (c/min),
- un changement de masseur toutes les 2 minutes environ,
- un rapport de la durée de CT au temps total de réanimation, appelé fraction CPR (*Cardio Pulmonary Resuscitation* pour Réanimation Cardio-Pulmonaire), qui doit être supérieure à 60% afin de majorer les chances de reprise d'activité cardiaque spontanée (RACS), et
- éventuellement une ventilation mécanique associée aux CT.

Or, réaliser un massage cardiaque de qualité n'est pas facile et les secouristes intervenant en cas d'arrêt cardiaque doivent suivre des formations spécifiques pour apprendre à réaliser un massage cardiaque efficace, c'est-à-dire une réanimation cardio-pulmonaire (RCP) de qualité.

En effet, si les CT ne sont pas bien réalisées, les chances de survie du patient diminuent, alors qu'à contrario, des CT efficaces favorisent une circulation artificielle du sang, en se substituant à une circulation spontanée, et induisent des mouvements thoraciques à l'origine d'une ventilation pulmonaire du patient et donc d'une élimination du CO₂ via des échanges gazeux pulmonaires.

Actuellement, lors des séances de formation et/ou de démonstration de réanimation cardio-pulmonaire (RCP) avec mise en œuvre de compressions thoraciques (CT) successives, on utilise habituellement des mannequins de réanimation équipés d'un thorax artificiel, sur lesquels les secouristes peuvent apprendre et/ou s'entrainer à exercer des CT efficaces, c'est-à-dire de qualité, par exemple les pompiers, les personnels soignants du SAMU, les personnels hospitaliers, tel que médecins ou infirmières, ou toute autre personne pouvant intervenir en cas d'arrêt cardiaque.

Les mannequins dévoués à la RCP disponibles sur le marché comprennent de nombreuses fonctionnalités et permettent notamment le monitorage de la qualité des compressions thoraciques. De tels mannequins sont notamment décrits par WO-A-2016/030393, WO-A-2018/127262, US-A-5,312,259 et EP-A-560440.

Cependant, aucun de ces mannequins ne permet de simuler et de mesurer les échanges gazeux au cours d'un arrêt cardiaque, notamment le rinçage ou le lavage du CO₂ lors de chaque CT, afin de permettre une représentation réaliste des échanges gazeux se produisant dans les poumons du patient.

En effet, un massage cardiaque efficace conduit à une meilleure ventilation des poumons et donc à une expulsion accrue de CO₂, du fait d'un meilleur échange gazeux au niveau des alvéoles et d'une meilleure circulation sanguine, et inversement, un mauvais massage engendre une ventilation et/ou une circulation limitée ou insuffisante.

Il est donc primordial de pouvoir rendre compte de tels échanges gazeux, lors d'une séance de formation par exemple, de manière à évaluer les qualités de la RCP.

Le problème est donc de pouvoir simuler et de mesurer les échanges gazeux, en particulier le rinçage du CO₂ lors de chaque CT, lors de l'utilisation d'un mannequin de réanimation, par exemple lors d'une séance de formation et/ou de démonstration de réanimation cardio-pulmonaire, afin d'améliorer la formation des secouristes appelés à intervenir sur des patients en cas d'arrêt cardiaque et ce, de manière à ce qu'ils soient aptes à réaliser des massages cardiaques efficaces prenant en compte aussi les échanges gazeux pulmonaires du patient.

En d'autres termes, l'invention vise à proposer un thorax artificiel pour mannequin de réanimation permettant de modéliser la cage thoracique et le compartiment pulmonaire d'un patient en arrêt cardiaque afin de simuler la dynamique gazeuse induite lors des mouvements de CT et de ventilation artificielle pratiquées par un secouriste.

La solution est alors un thorax artificiel pour mannequin de réanimation comprenant au moins un réservoir d'air déformable comprenant un volume interne contenant de l'air et comprenant un premier orifice en communication fluidique avec le volume interne, ledit réservoir d'air déformable se déformant et au moins une partie de l'air sortant du volume interne par le premier orifice, lorsqu'une action de compression est exercée, directement ou indirectement, sur ledit réservoir d'air déformable, en particulier une action de compression manuelle exercée par un utilisateur, caractérisé en ce qu'il comprend en outre une source de CO₂ contenant du CO₂ reliée fluidiquement au volume interne du réservoir d'air déformable de manière à alimenter ledit volume interne avec du CO₂ gazeux. La présente invention concerne un thorax artificiel tel que défini dans la revendication indépendante 1, un mannequin d'entrainement tel que défini dans la revendication indépendante 8 ainsi que l'utilisation du thorax artificiel telle que définie dans la revendication indépendante 15.

Selon le mode de réalisation considéré, le thorax artificiel de l'invention peut comprendre l'une ou plusieurs des caractéristiques suivantes :
- il comprend par ailleurs au moins un actionneur, actionnable manuellement par un utilisateur, ledit au moins un actionneur coopérant avec ledit au moins un réservoir d'air déformable de sorte que lorsque l'utilisateur exerce une action de compression manuelle sur ledit au moins actionneur mobile, ledit au moins un actionneur mobile agit, directement ou indirectement, sur ledit réservoir d'air déformable pour le déformer, ce qui permet d'expulser au moins une partie du gaz qu'il contient par le premier orifice.
- il comprend par ailleurs au moins un dispositif de rappel élastique coopérant avec ledit au moins un actionneur et/ou avec ledit réservoir d'air déformable.
- il comprend par ailleurs au moins un dispositif de compression élastique coopérant avec ledit au moins un actionneur et/ou avec ledit réservoir d'air déformable.
- ledit au moins un dispositif de compression élastique comprend un premier ressort.
- ledit au moins un dispositif de rappel élastique comprend un deuxième ressort.
- la source de CO₂ contient du CO₂ à une teneur supérieure à 5% en volume, de préférence d'au moins 50% en volume, préférentiellement uniquement du CO₂ (100% vol.).
- la source de CO₂ contient du CO₂ sous forme gazeuse.
- la source de CO₂ est un récipient de gaz sous pression.
- la source de CO₂ est une bouteille de gaz ou une cartouche rechargeable ou à usage unique.
- la source de CO₂ a un volume inférieur ou égal à 50L, de préférence inférieur ou égal à 20L, de préférence encore inférieur ou égal à 10L.
- la source de CO₂ contient du gaz à une pression inférieure ou égale à 300 bar absolus, de préférence inférieure ou égale à 200 bar absolus.
- la source de CO₂ est équipée d'une vanne de fourniture de gaz de type robinet ou robinet à détendeur intégré (RDI).
- la source de CO₂ est agencée de manière à alimenter le volume interne du réservoir d'air déformable avec du CO₂ gazeux afin d'obtenir un mélange air/CO₂ dans le volume interne.
- le volume interne du réservoir d'air déformable est de l'ordre de 2,5 à 3 litres (équivalent en eau) de manière à représenter assez fidèlement le volume pulmonaire de base/de fin d'expiration non forcée d'un patient, aussi appelé la capacité résiduelle fonctionnelle (CRF).
- le réservoir d'air déformable comprend une paroi périphérique en forme de soufflet, c'est-à-dire en accordéon.
- le réservoir d'air déformable comprend un axe longitudinal (AA).
- le réservoir d'air déformable est conçu pour se déformer selon l'axe longitudinal (AA).
- le réservoir d'air déformable est en élastomère ou analogue.

L'invention concerne aussi un mannequin d'entrainement, de démonstration, de simulation ou analogue comprenant un thorax artificiel selon l'invention.

Selon le mode de réalisation considéré, le mannequin de l'invention peut comprendre l'une ou plusieurs des caractéristiques suivantes :
- il comprend une enveloppe externe de forme humaine, en particulier un tronc et une tête.
- l'enveloppe externe est en polymère souple ou analogue.
- il comprend une tête avec bouche munie d'un orifice de gaz en communication fluidique avec le volume interne du réservoir d'air déformable du thorax artificiel.
- l'orifice situé dans la bouche est relié fluidiquement au réservoir d'air déformable du thorax artificiel par un conduit de gaz ou analogue.
- l'orifice situé dans la bouche est relié fluidiquement au premier orifice du réservoir d'air déformable.
- il comprend des moyens de monitorage du CO₂.
- les moyens de monitorage du CO₂ comprennent des moyens de mesure de teneur en CO₂ et moyens de traitement de signal.
- les moyens de mesure de teneur en CO₂ comprennent un capteur de CO₂ ou capnomètre.
- les moyens de mesure de teneur en CO₂ sont conçus et/ou configurés pour opérer des mesures de concentration en CO₂ dans le gaz provenant du réservoir d'air déformable et fournir un ou des signaux de mesure de teneur en CO₂ aux moyens de traitement de signal.
- les moyens de traitement de signal sont configurés pour traiter le ou les signaux de mesure de teneur en CO₂ fournis par les moyens de mesure de teneur en CO₂.
- le capteur de CO₂ est agencé en configuration « flux principal » (i.e. *mainstream* en anglais), en particulier au plus près de la bouche du mannequin ou au plus près du réservoir d'air déformable, c'est-à-dire préférentiellement au plus proche de l'orifice du réservoir d'air déformable, ou encore entre les deux.
- préférentiellement, le capteur de CO₂ est configuré pour opérer des mesures en continu de la concentration en CO₂ dans le gaz provenant du réservoir d'air déformable, en particulier de l'air enrichi en CO₂ grâce à une adjonction de CO₂ provenant de la source de CO₂.
- les moyens de traitement de signal comprennent une carte électronique.
- la carte électronique comprend au moins un microprocesseur, de préférence un microcontrôleur, mettant en œuvre un ou plusieurs algorithmes.
- le capteur de CO₂ forme tout ou partie d'un dispositif de mesure et de monitoring indépendant.
- de façon alternative, le capteur de CO₂ est relié à la carte électronique.
- il comprend en outre des moyens d'affichage, i.e. de visualisation, par exemple un afficheur ou un écran d'affichage, permettant d'afficher une ou des informations, données, représentations graphiques, notamment des valeurs ou courbes de CO₂, ou autres.
- la carte électronique est reliée électriquement aux moyens d'affichage, c'est-à-dire à l'afficheur.
- les moyens d'affichage sont configurés pour afficher au moins une concentration ou teneur en CO₂ de manière numérique ou analogique, notamment sous forme de représentations graphiques, telles des courbes, graphes...
- les moyens d'affichage sont configurés pour afficher au moins une concentration (i.e. teneur) en CO₂ déterminée et fournie par les moyens de traitement de signal après traitement d'un ou de signaux de mesure de teneur en CO₂ fournis par les moyens de mesure de teneur en CO₂.
- les moyens d'affichage comprennent un écran d'affichage déporté qui est relié à la carte électronique par un câble électrique ou analogue, par exemple un écran d'ordinateur.
- il comprend des moyens de contrôle de libération du CO₂ permettant de contrôler l'adjonction de CO₂ dans le réservoir d'air déformable et donc la formation du mélange air/CO₂ au sein dudit réservoir d'air déformable.
- les moyens de contrôle de libération du CO₂ comprennent un ou plusieurs capteurs et des moyens à vannes, typiquement une ou des électrovannes.
- les moyens de contrôle de libération du CO₂ comprennent au moins un capteur configuré pour évaluer la qualité des compressions thoraciques (CT), en particulier des paramètres représentatifs des CT, tels que fréquence des CT, amplitude des CT, retour à la position initiale lors de la décompression durant les cycles de CT, position des mains sur le thorax...
- les moyens de contrôle de libération du CO₂ sont pilotés par des moyens de pilotage, de préférence les moyens de pilotage comprennent au moins une carte électronique.
- les moyens à vannes, typiquement une ou des électrovannes, sont agencés entre la source de CO₂ et le réservoir d'air déformable de manière à ajuster, régler ou réguler la quantité de CO₂ introduite dans le réservoir d'air déformable.
- les moyens à vannes sont agencés sur le trajet du gaz entre la source de CO₂ et le réservoir d'air déformable, par exemple sur la ligne d'acheminement de gaz reliant la source de CO₂ au réservoir d'air déformable, telle une conduite de gaz.
- les moyens de pilotage sont configurés pour agir sur les moyens à vanne pour ajuster ou régler la quantité ou le débit de CO₂ fournis au réservoir d'air déformable en fonction d'une quantité de CO₂ (pré)réglée ou sélectionnée par un utilisateur, par exemple au moyen d'un dispositif mécanique de type robinet ou analogue.
- alternativement, les moyens de pilotage sont configurés pour agir sur les moyens à vanne en réponse à au moins un signal délivré par le capteur servant à évaluer la qualité des CT (i.e. fréquence, amplitude etc...), de manière à délivrer automatiquement une quantité ou un débit de CO₂ qui est fonction de ladite qualité des CT.
- les moyens de pilotage sont configurés pour agir de manière proportionnelle ou en tout-ou-rien sur les moyens à vanne.
- il comprend en outre des moyens d'alimentation électrique, telle une (ou des) batterie ou une prise et un cordon de raccordement au secteur.
- les moyens d'alimentation électrique sont raccordés électriquement aux différents composants (e.g. cartes électroniques, capteurs, afficheur...) nécessitant d'être alimentés électriquement pour fonctionner.

Par ailleurs, l'invention concerne aussi l'utilisation d'un thorax artificiel selon l'invention ou d'un mannequin selon l'invention lors d'une séance d'entrainement, de démonstration ou de simulation de réanimation cardio-pulmonaire (RCP) avec mise en œuvre de compressions thoraciques successives opérées sur ledit thorax artificiel ou mannequin.

L'invention va maintenant être mieux comprise grâce à la description détaillée suivante, faite à titre illustratif mais non limitatif, en référence aux figures annexées parmi lesquelles:
[Fig. 1] schématise un thorax artificiel selon l'invention, et
[Fig. 2] schématise un mannequin comprenant un thorax artificiel selon l'invention.

Le dioxyde de carbone (CO₂) tient une place primordiale lors de la réanimation cardio-pulmonaire (RCP). Ainsi, selon les recommandations internationales du European Resuscitation Council (ERC), son monitorage est recommandé lors d'une RCP pour plusieurs raisons :
- le bon positionnement de la sonde endotrachéale lors de l'intubation,
- estimer l'efficacité des compressions thoraciques (CT),
- calculer la fréquence respiratoire,
- détecter la reprise d'activité cardiaque spontanée (RACS),
- et aider au pronostic du patient.

Pendant une RCP pratiquée sur une personne en arrêt cardio-pulmonaire, avec mise en œuvre d'un massage cardiaque, le CO₂ alvéolaire, qui dépend non seulement des rapports ventilation/perfusion pulmonaire mais aussi de la quantité de CO₂ générée par le métabolisme cellulaire, représente un paramètre très utile au secouriste, par exemple un médecin, pour juger de l'efficacité de la RCP.

Une ventilation de qualité est cruciale afin d'éliminer le CO₂. En effet, plus la RCP est efficace, plus le débit cardiaque généré par les CT est important et donc plus la quantité de CO₂ acheminée vers les poumons est importante. Dans les appareils de ventilation mécanique, le monitorage du CO₂ est réalisé grâce à la mesure du paramètre EtCO₂ (pour End tidal CO₂) qui reflète indirectement le CO₂ alvéolaire.

Le retour veineux est également un élément très important lors d'une RCP. Il est dû à la pression intra-thoracique (PIT) négative résultant des forces de recul du thorax pendant la décompression. L'amplitude de cette pression négative est principalement influencée par le retour du volume pulmonaire à la capacité résiduelle fonctionnelle (CRF). La CRF correspond au volume d'air résiduel dans les poumons après une expiration spontanée et non forcée. En réalité, dans le cas très spécifique de l'arrêt cardiaque la CRF est tout simplement le volume d'air présent dans les poumons lorsque le patient s'effondre. Le volume pulmonaire apparaît donc comme un élément essentiel en cas de RCP.

Un mannequin équipé d'un thorax artificiel permet de refléter de la manière la plus précise possible les phénomènes physiologiques importants à prendre en compte lors d'une RCP, se déroulant dans le thorax et le système respiratoire et donc de simuler de façon réaliste un patient en arrêt cardio-pulmonaire, notamment lors d'une séance de formation et/ou d'une démonstration de réanimation cardio-pulmonaire (RCP) avec mise en œuvre de compressions thoraciques (CT).

Dans le cadre de la présente invention, on propose un mannequin équipé d'un thorax artificiel qui est amélioré par rapport à ceux existants car permettant de rendre compte des échanges gazeux pulmonaires, en particulier de simuler une quantité de CO₂ expulsée par les poumons du mannequin du fait des CT et ainsi aider les secouristes pratiquant le massage cardiaque en leur apprenant à prendre en compte ce CO₂, notamment pour déterminer un RACS.

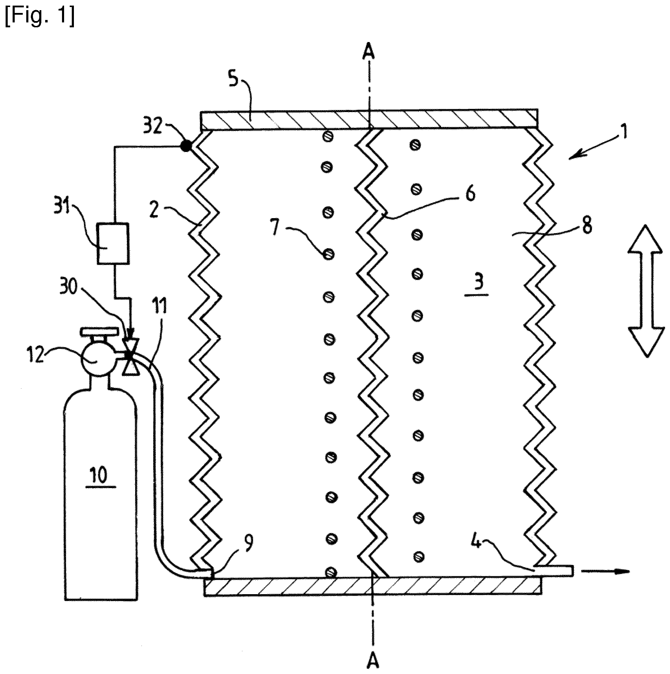

[Fig. 1] schématise un thorax artificiel 1 pour mannequin de réanimation selon l'invention permettant de simuler et de préférence de mesurer les échanges gazeux, en particulier le rinçage du CO₂ lors de chaque CT, pendant par exemple une séance de formation et/ou de démonstration de RCP avec mise en œuvre de CT, c'est-à-dire d'un massage cardio-pulmonaire.

Le thorax artificiel 1 comprenant un réservoir d'air déformable 2, par exemple en matériau élastomère ou analogue, ayant un axe longitudinal (AA) et définissant un volume interne 3 contenant de l'air. Ce réservoir d'air déformable 2 peut avoir une forme de soufflet, c'est-à-dire une paroi périphérique 8 en « accordéon » ou analogue. Le volume interne 3 du réservoir d'air déformable 2 représente le volume pulmonaire d'un patient, aussi appelé la capacité résiduelle fonctionnelle (CRF), et est de l'ordre de 2,5 à 3 litres (environ 30 mL/Kg).

Par ailleurs, le réservoir d'air déformable 2 comprend un premier orifice 4 en communication fluidique avec le volume interne 3 et est conçu pour se déformer et expulser au moins une partie du gaz qu'il contient par le premier orifice 4, lorsqu'un utilisateur, tel un secouriste apprenant à masser, exerce, directement ou indirectement, une action de compression manuelle sur le réservoir d'air déformable 2, typiquement une compression axiale selon l'axe (AA), c'est-à-dire de haut vers le bas sur la Fig. 1.

De préférence, il comprend par ailleurs un actionneur 5 mobile, actionnable manuellement par l'utilisateur, qui coopère avec le réservoir d'air déformable 2 de sorte que lorsque l'utilisateur exerce une action de compression manuelle sur cet actionneur mobile 5, celui-ci agit, directement ou indirectement, sur le réservoir d'air déformable 2 pour le déformer et en expulser du gaz via le premier orifice 4.

L'actionneur 5 peut être par exemple une plaque rigide ou analogue. Cet actionneur 5 simule en fait la cage thoracique du patient.

Afin de permettre les déplacements de haut vers le bas, et inversement, de l'actionneur 5 et les compressions et décompressions axiales (AA) du réservoir d'air déformable 2, sont également prévus un (ou plusieurs) dispositif de compression élastique 6 et un (ou plusieurs) dispositif de rappel élastique 7 coopérant avec l'actionneur 5 et/ou avec le réservoir d'air déformable 2, dont les forces de résistance et de répulsion sont choisies pour reproduire les propriétés mécaniques du système respiratoire d'un individu en arrêt cardiaque.

De préférence, le dispositif de compression élastique 6 comprend un (ou des) premier ressort, appelé ressort de compression, et le dispositif de rappel élastique 7 comprend un (ou des) deuxième ressort, appelé ressort d'extension. Avantageusement, ils sont agencés à l'intérieur du volume interne 3 du réservoir d'air déformable 2, comme visible sur [Fig. 1], c'est-à-dire à l'intérieur du soufflet. Une telle architecture interne de thorax est classique et connue de WO-A-2016/030393, auquel on peut se reporter pour plus de détails.

Ainsi, le (ou les) ressort de compression permet de créer une résistance lors du massage, c'est-à-dire lors de chaque CT appliquée par le secouriste sur l'actionneur 5, i.e. selon l'axe (AA) dans le sens du haut vers le bas, alors que le (ou les) ressort d'extension crée une résistance à l'insufflation d'air, c'est-à-dire pendant la durée de relâchement (i.e. de non-CT) suivant une CT, pendant laquelle une ventilation mécanique peut être mise en place, par exemple à l'aide d'un appareil de ventilation assistée, aussi appelé ventilateur médical, ou d'un ballon de ventilation manuelle, aussi appelé BAVU, permettant d'insuffler de l'air au patient.

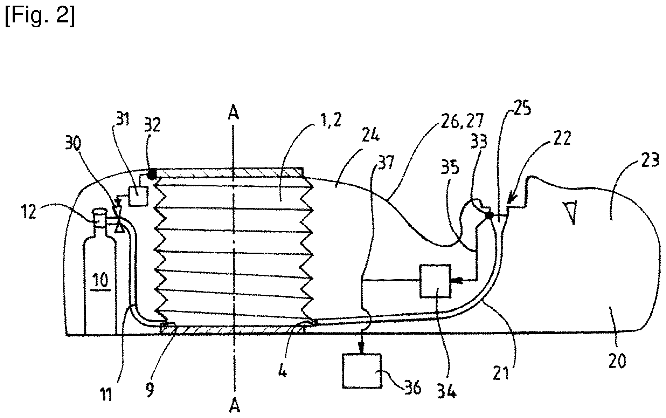

Selon l'invention, afin de pouvoir simuler et éventuellement mesurer les échanges gazeux, en particulier le rinçage du CO₂ lors de chaque CT, lors de l'utilisation d'un tel thorax artificiel, en particulier lorsqu'il est intégré à un mannequin de réanimation comme illustré en [Fig. 2], par exemple lors d'une séance de formation et/ou de démonstration de RCP, dans le but d'améliorer la formation des secouristes en leur permettant de réaliser des massages cardiaques efficaces prenant en compte aussi les échanges gazeux pulmonaires du patient, on prévoit une source de CO₂ 10 contenant du CO₂ gazeux qui est reliée fluidiquement au volume interne 3 du réservoir d'air déformable 2 de manière à alimenter ce volume interne 3 avec du CO₂ gazeux et obtenir un mélange air/CO₂, qui peut être ensuite monitoré.

Plus précisément, le thorax artificiel 1 pour mannequin 20 de réanimation selon l'invention alimenté par une telle source de CO₂ 10 rend possible une modélisation de la cage thoracique et du compartiment pulmonaire d'un patient en arrêt cardiaque afin de simuler la dynamique gazeuse induite lors des mouvements de CT pratiquées par le secouriste, en particulier l'expulsion du CO₂.

En effet, le CO₂ qui est directement apporté au niveau des poumons du patient par les CT durant le massage cardiaque, permet d'obtenir une représentation de la production de CO₂ au cours de la RCP et il est donc primordial de pouvoir le simuler lors d'un entrainement ou analogue sur mannequin d'entrainement 20.

Selon l'invention, le fait d'avoir un volume pulmonaire réaliste, i.e. 2,5 à 3 L de volume interne 3, associé à un apport variable de CO₂ cohérent prenant de la source de CO₂ 10 dans le système respiratoire du thorax 1 artificiel du mannequin 20 permet de reproduire fidèlement les échanges gazeux au cours d'un arrêt cardiaque, c'est-à-dire l'insufflation d'air contenant de l'oxygène (O₂) lors de la ventilation avec insufflation d'air, et l'expiration du gaz riche en CO₂, lors de chaque CT dues au massage cardiaque.

La source de CO₂ 10 est avantageusement une petite bouteille de gaz sous pression, c'est-à-dire ayant un volume interne de 10 L ou moins (équivalent en eau), par exemple de 2L à 5L, et contenant du CO₂ pur (100%) ou un mélange de CO₂ avec un gaz porteur, par exemple un gaz inerte, tel l'azote, à une pression inférieure ou égale à 200 bar abs.

Comme illustrée en [Fig. 1], la bouteille de CO₂ 10, par exemple en alliage d'aluminium, est reliée fluidiquement au volume interne 3 du réservoir déformable 2 par un tuyau flexible 11 communiquant avec le volume interne 3 via un second orifice 9 permettant une adjonction de CO₂ dans le volume interne 3.

La bouteille de CO₂ 10 est équipée d'une vanne de fourniture de gaz, par exemple un robinet à détendeur de gaz intégré ou autre permettant de réduire la pression du gaz jusqu'à une pression d'utilisation de l'ordre de quelques bar abs, par exemple de l'ordre de 1 à 4 bar abs.

Il est prévu en outre des moyens de contrôle de libération du CO₂ permettant de contrôler l'adjonction de CO₂ dans le réservoir d'air déformable 2 et donc la formation du mélange air/CO₂ dans le volume interne 3 du réservoir d'air déformable 2.

Les moyens de contrôle de libération du CO₂ comprennent des moyens à vannes 30, par exemple une électrovanne commandée, ou encore un dispositif mécanique à réglage manuel.

Les moyens à vannes 30 sont agencés entre la source de CO₂ 10 et le réservoir d'air déformable 2, typiquement, sur le trajet du gaz entre la source de CO₂ 10 et le réservoir d'air déformable 2, par exemple sur la ligne d'acheminement de gaz 11, telle une conduite de gaz, reliant la source de CO₂ 10 au réservoir d'air déformable 2, comme schématisé en [Fig. 1].

Avantageusement, on prévoit également un (ou des) capteur 32 configuré pour évaluer la qualité des compressions thoraciques (CT), c'est-à-dire des paramètres représentatifs des CT, tels que fréquence des CT, amplitude des CT, retour à la position initiale lors de la décompression durant les cycles de CT, position des mains sur le thorax...

De préférence, les moyens à vannes 30 sont pilotés par des moyens de pilotage 31, de préférence une carte électronique comprenant un ou des microprocesseurs, de préférence un microcontrôleur, de manière à ajuster, régler ou réguler la quantité de CO₂ introduite dans le réservoir d'air déformable 2.

Selon un mode de réalisation, les moyens de pilotage 31 sont configurés pour agir sur les moyens à vanne 30 en réponse à au moins un signal délivré par le (ou les) capteur 32 servant à évaluer la qualité des CT (i.e. fréquence, amplitude etc...), de manière à délivrer automatiquement une quantité ou un débit de CO₂ qui est fonction de la qualité des CT.

Selon un autre mode de réalisation, les moyens de pilotage 31 peuvent être aussi configurés pour agir sur les moyens à vanne 30 pour ajuster ou régler la quantité ou le débit de CO₂ fournis au réservoir d'air déformable 2 en fonction d'une quantité de CO₂ (pré)réglée ou sélectionnée par un utilisateur.

D'une façon générale, les moyens de pilotage 31 sont configurés pour agir de manière proportionnelle ou en tout-ou-rien sur les moyens à vanne 30.

Par ailleurs, il comprend des moyens de monitorage du CO₂ incluant des moyens de mesure de teneur en CO₂ 33, tel un capteur de CO₂ ou capnomètre, et des moyens de traitement de signal 34.

Les moyens de mesure de teneur en CO₂ 33, c'est-à-dire le capnomètre, sont conçus ou configurés pour opérer des mesures de concentration en CO₂ dans le gaz provenant du réservoir d'air déformable 2, c'est-à-dire le mélange air/CO₂, et fournir des signaux de mesure de teneur en CO₂ aux moyens de traitement de signal 34.

Dans le mode de réalisation de la [Fig. 2], le capteur de CO₂ 33 est agencé en configuration « flux principal » au plus près de la bouche 25 du mannequin 20. Toutefois, on pourrait aussi l'agencer au plus proche de l'orifice de sortie 4 du réservoir d'air déformable 2, ou encore entre cet orifice de sortie 4 et la bouche 25 du mannequin 20. Le capteur de CO₂ 33 est connecté (via 35) aux moyens de traitement de signal 34, typiquement une carte électronique à microprocesseur, de préférence un microcontrôleur, mettant en œuvre un ou plusieurs algorithmes, de manière à lui transmettre les signaux de mesure de teneur en CO₂ provenant dudit capteur 33.

Les moyens de traitement de signal 34 sont, quant à eux, configurés pour traiter les signaux de mesure de teneur en CO₂ fournis. Ils coopèrent avec des moyens d'affichage 36 ou de visualisation, par exemple un écran d'affichage d'un ordinateur ou analogue, de manière à leur transmettre et y afficher une ou des informations, valeurs, données, représentations graphiques, notamment des valeurs ou courbes de CO₂, ou autres. En particulier, les moyens d'affichage 36 sont configurés pour afficher au moins une concentration ou teneur en CO₂ de manière numérique ou analogique, notamment sous forme de représentations graphiques, telles des courbes, graphes...

La liaison 37 entre les moyens de traitement de signal 34 et les moyens d'affichage 36 permettant notamment la transmission des données ou autres, peut être filaire ou sans fil, par exemple de type Wifi ou Bluetooth.

Il est à noter que les cartes électroniques 31, 34 peuvent être une seule ou plusieurs cartes électroniques.

[Fig. 2] schématise un mannequin 20 comprenant un thorax artificiel 1 selon l'invention et les autres éléments mentionnés ci-dessus.

Le mannequin 20 comprend, dans ce mode de réalisation, une enveloppe extérieure ayant une forme générale d'un corps humain avec ici un tronc 24 et une tête 23. L'enveloppe 26 peut être rigide ou semi-rigide, par exemple en polymère, et peut être recouverte d'un tissu artificiel flexible 27 représentant la peau. Préférentiellement, la tête comprend un visage comprenant un nez, des yeux et une bouche 25 munie d'un orifice de gaz 22 reliée fluidiquement au volume interne 3 du réservoir déformable 2 via un passage de gaz 21, tel un tube, un conduit de gaz ou analogue, et le premier orifice 4 du réservoir 2.

Le passage de gaz 21 permet les échanges gazeux du réservoir 2 vers la bouche 25 et l'orifice de sortie de gaz 22, lors des CT, et l'acheminement du gaz, dans le sens opposé, c'est-à-dire vers le réservoir 2 déformable, lors de l'insufflation de gaz lors des périodes de non-CT, lorsque le mannequin 20 est relié fluidiquement à un dispositif de ventilation artificielle, tel qu'un ventilateur médical ou bien un BAVU, c'est-à-dire un ballon autoremplisseur à valve unidirectionnelle (non montré).

Le mannequin 20 à thorax artificiel 1 selon l'invention peut être utilisé pour la formation à la RCP, pour une démonstration de RCP, pour un entrainement ou à toutes autres fins, notamment pour tester un dispositif spécifique à la RCP, dans le but de simuler les voies respiratoires d'une personne. Selon d'autres modes de réalisation, il peut aussi comprendre des bras et/ou des jambes.

Grâce à un apport de CO₂ contrôlé et à un volume interne 3 représentatif la capacité résiduelle fonctionnelle (CRF) d'un patient, un tel mannequin 20 constitue un modèle physiologique représentatif d'un patient en arrêt cardio-respiratoire (ACR).

Selon l'invention, l'adjonction de CO₂ à l'air contenu dans le volume interne 3 du réservoir 2 permet de simuler un bon et un mauvais massage cardiaque, et donc de refléter et simuler les mécanismes inhérents à la physiologie de l'arrêt cardiaque. En effet, in vivo, le suivi du CO₂ expulsé lors des CT, est un très bon indicateur de la qualité des CT, ainsi que de la circulation du patient.

L'adjonction de CO₂ se fait grâce à du CO₂ gazeux provenant d'une source de CO₂ 10, telle une petite bouteille ou cartouche de CO₂, comme expliqué ci-avant, laquelle peut être soit intégrée dans l'enveloppe du mannequin 20, comme illustré en [Fig. 2], soit placée à l'extérieur du mannequin 20.

Un tel thorax artificiel 1 et/ou mannequin 20 selon l'invention peuvent être utilisées lors d'une séance d'entrainement, de démonstration ou de simulation de réanimation cardio-pulmonaire (RCP) avec mise en œuvre de compressions thoraciques successives opérées sur ledit thorax artificiel 1 ou mannequin 20.

## Revendications

1. Thorax artificiel (1) comprenant au moins un réservoir d'air déformable (2) comprenant un volume interne (3) contenant de l'air et comprenant un premier orifice (4) en communication fluidique avec le volume interne (3), ledit réservoir d'air déformable (3) se déformant et au moins une partie de l'air sortant du volume interne (3) par le premier orifice (4), lorsqu'une action de compression est exercée, directement ou indirectement, sur ledit réservoir d'air déformable (2), **caractérisé en ce qu'**il comprend en outre une source de CO₂ (10) contenant du CO₂ reliée fluidiquement (11) au volume interne (3) du réservoir d'air déformable (2) de manière à alimenter ledit volume interne (3) avec du CO₂ gazeux.

2. Thorax artificiel selon la revendication précédente, **caractérisé en ce qu'**il comprend par ailleurs au moins un actionneur (5), actionnable manuellement par un utilisateur, coopérant avec ledit au moins un réservoir d'air déformable (2) de sorte que lorsque l'utilisateur exerce une action de compression manuelle sur ledit au moins actionneur mobile (5), ledit au moins un actionneur mobile (5) agit, directement ou indirectement, sur ledit réservoir d'air déformable (2) pour le déformer.

3. Thorax artificiel selon la revendication 2, **caractérisé en ce qu'**il comprend par ailleurs au moins un dispositif de compression élastique (6) et/ou au moins un dispositif de rappel élastique (7) coopérant avec ledit au moins un actionneur (5) et/ou avec ledit réservoir d'air déformable (2).

4. Thorax artificiel selon l'une des revendications précédentes, **caractérisé en ce que** la source de CO₂ (10) contient du CO₂ à une teneur supérieure à 5% en volume, de préférence d'au moins 50% en volume, préférentiellement uniquement du CO₂ (100% vol.).

5. Thorax artificiel selon l'une des revendications précédentes, **caractérisé en ce que** la source de CO₂ (10) est un récipient de gaz sous pression, en particulier une bouteille de gaz.

6. Thorax artificiel selon l'une des revendications précédentes, **caractérisé en ce que** la source de CO₂ (10) est agencée de manière à alimenter le volume interne (3) du réservoir d'air déformable (2) avec du CO₂ gazeux de manière à obtenir un mélange air/CO₂ dans ledit volume interne (3).

7. Thorax artificiel selon la revendication 3, **caractérisé en ce que** ledit au moins un dispositif de compression élastique (6) et/ou ledit au moins un dispositif de rappel élastique (7) sont agencés à l'intérieur du volume interne (3) du réservoir d'air déformable (2).

8. Mannequin (20) d'entrainement, de démonstration ou de simulation comprenant un thorax artificiel (1) selon l'une des revendications précédentes, de préférence ledit mannequin (20) a une forme humaine, notamment de tronc (24) et de tête (23).

9. Mannequin (20) selon la revendication 8, **caractérisé en ce qu'**il comprend une bouche (25) avec un orifice de gaz (22) relié fluidiquement au premier orifice (4) du réservoir d'air déformable (2).

10. Mannequin (20) selon la revendication 8, **caractérisé en ce qu'**il comprend en outre des moyens de monitorage du CO₂ comprenant des moyens de mesure de teneur en CO₂ (33) et moyens de traitement de signal (34).

11. Mannequin (20) selon la revendication 10, **caractérisé en ce que** les moyens de mesure de teneur en CO₂ (33) sont conçus et/ou configurés pour opérer des mesures de concentration en CO₂ dans le gaz provenant du réservoir d'air déformable (2) et fournir un ou des signaux de mesure de teneur en CO₂ aux moyens de traitement de signal (34), de préférence les moyens de mesure de teneur en CO₂ (33) comprennent un capteur de CO₂.

12. Mannequin (20) selon la revendication 8, **caractérisé en ce qu'**il comprend en outre des moyens d'affichage configurés pour afficher une ou des informations, données, représentations graphiques, notamment des valeurs ou courbes de CO₂.

13. Mannequin (20) selon les revendications 11 et 12, **caractérisé en ce que** :
- les moyens de traitement de signal (34) sont configurés pour traiter le ou les signaux de mesure de teneur en CO₂ fournis par les moyens de mesure de teneur en CO₂ (33), et
- les moyens d'affichage sont configurés pour afficher au moins une concentration en CO₂ déterminée et fournie par les moyens de traitement de signal (34), après traitement d'un ou de signaux de mesure de teneur en CO₂ fournis par les moyens de mesure de teneur en CO₂ (33).

14. Mannequin (20) selon la revendication 8, **caractérisé en ce qu'**il comprend en outre des moyens de contrôle de libération du CO₂ permettant de contrôler l'adjonction de CO₂ dans le réservoir d'air déformable (2) et la formation du mélange air/CO₂ dans le volume interne (3) du réservoir d'air déformable (2).

15. Utilisation d'un thorax artificiel (1) selon l'une des revendications 1 à 7 ou d'un mannequin (20) selon l'une des revendications 8 à 14 lors d'une séance d'entrainement, de démonstration ou de simulation de réanimation cardio-pulmonaire (RCP) avec mise en œuvre de compressions thoraciques successives opérées sur ledit thorax artificiel (1) ou mannequin (20).

## Patentansprüche

1. Künstlicher Thorax (1), der mindestens ein verformbares Luftreservoir (2) umfasst, das ein Innenvolumen (3) umfasst, das Luft enthält und eine erste Öffnung (4) umfasst, die in Fluidverbindung mit dem Innenvolumen (3) steht, wobei sich das verformbare Luftreservoir (3) verformt und mindestens ein Teil der Luft aus dem Innenvolumen (3) durch die erste Öffnung (4) austritt, wenn eine Kompressionswirkung, direkt oder indirekt, auf das verformbare Luftreservoir (2) ausgeübt wird, **dadurch gekennzeichnet, dass** er ferner eine CO₂ enthaltende CO₂-Quelle (10) umfasst, die mit dem Innenvolumen (3) des verformbaren Luftreservoirs (2) fluidisch verbunden (11) ist, so dass sie dem Innenvolumen (3) gasförmiges CO₂ zuführt.

2. Künstlicher Thorax nach dem vorhergehenden Anspruch, **dadurch gekennzeichnet, dass** er im Übrigen mindestens einen von einem Benutzer manuell betätigbaren Aktor (5) umfasst, der mit dem mindestens einen verformbaren Luftreservoir (2) zusammenwirkt, so dass, wenn der Benutzer eine manuelle Kompressionswirkung auf den mindestens beweglichen Aktor (5) ausübt, der mindestens eine bewegliche Aktor (5), direkt oder indirekt, auf das verformbare Luftreservoir (2) einwirkt, um es zu verformen.

3. Künstlicher Thorax nach Anspruch 2, **dadurch gekennzeichnet, dass** er im Übrigen mindestens eine elastische Kompressionsvorrichtung (6) und/oder mindestens eine elastische Rückstellvorrichtung (7) umfasst, die mit dem mindestens einen Aktor (5) und/oder mit dem verformbaren Luftreservoir (2) zusammenwirken.

4. Künstlicher Thorax nach einem der vorhergehenden Ansprüche, **dadurch gekennzeichnet, dass** die CO₂-Quelle (10) CO₂ mit einem Gehalt von mehr als 5 Vol.-%, bevorzugt mindestens 50 Vol.-%, vorzugsweise nur CO₂ (100 Vol.-%), enthält.

5. Künstlicher Thorax nach einem der vorhergehenden Ansprüche, **dadurch gekennzeichnet, dass** die CO₂-Quelle (10) ein Druckgasbehälter ist, insbesondere eine Gasflasche.

6. Künstlicher Thorax nach einem der vorhergehenden Ansprüche, **dadurch gekennzeichnet, dass** die CO₂-Quelle (10) so eingerichtet ist, dass sie dem Innenvolumen (3) des verformbaren Gasreservoirs (2) gasförmiges CO₂ derart zuführt, dass ein Luft/CO₂-Gemisch in dem Innenvolumen (3) erhalten wird.

7. Künstlicher Thorax nach Anspruch 3, **dadurch gekennzeichnet, dass** die mindestens eine elastische Kompressionsvorrichtung (6) und/oder die mindestens eine elastische Rückstellvorrichtung (7) im Inneren des Innenvolumens (3) des verformbaren Luftreservoirs (2) eingerichtet sind.

8. Trainings-, Demonstrations- oder Simulationspuppe (20), die einen künstlichen Thorax (1) nach einem der vorhergehenden Ansprüche umfasst, wobei die Trainingspuppe (20) bevorzugt eine menschliche Form hat, insbesondere mit einem Rumpf (24) und einem Kopf (23).

9. Trainingspuppe (20) nach Anspruch 8, **dadurch gekennzeichnet, dass** sie einen Mund (25) mit einer Gasöffnung (22) umfasst, die fluidisch mit der ersten Öffnung (4) des verformbaren Gasreservoirs (2) verbunden ist.

10. Trainingspuppe (20) nach Anspruch 8, **dadurch gekennzeichnet, dass** sie ferner Einrichtungen zur Überwachung des CO₂ umfasst, die CO₂-Gehalt-Messeinrichtungen (33) und Signalverarbeitungseinrichtungen (34) umfassen.

11. Trainingspuppe (20) nach Anspruch 10, **dadurch gekennzeichnet, dass** die CO₂-Gehalt-Messeinrichtungen (33) dazu ausgelegt und/oder ausgestaltet sind, CO₂-Konzentrationsmessungen in dem aus dem verformbaren Luftreservoir (2) kommenden Gas vorzunehmen und ein oder mehrere CO₂-Gehalt-Messsignale an die Signalverarbeitungseinrichtungen (34) zu liefern, wobei die CO₂-Gehalt-Messeinrichtungen (33) bevorzugt einen CO₂-Sensor umfassen.

12. Trainingspuppe (20) nach Anspruch 8, **dadurch gekennzeichnet, dass** sie ferner Anzeigeeinrichtungen umfasst, die dazu ausgestaltet sind, ein oder mehrere Informationen, Daten, grafische Darstellungen, insbesondere CO₂-Werte oder -Kurven, anzuzeigen.

13. Trainingspuppe (20) nach den Ansprüchen 11 und 12, **dadurch gekennzeichnet, dass**:
- die Signalverarbeitungseinrichtungen (34) dazu ausgestaltet sind, das oder die CO₂-Gehalt-Messsignale, die von den CO₂-Gehalt-Messeinrichtungen (33) geliefert werden, zu verarbeiten, und
- die Anzeigeeinrichtungen dazu ausgestaltet sind, mindestens eine CO₂-Konzentration anzuzeigen, die von den Signalverarbeitungseinrichtungen (34) nach der Verarbeitung eines oder mehrerer CO₂-Gehalt-Messsignale, die von den CO₂-Gehalt-Messeinrichtungen (33) geliefert werden, bestimmt und geliefert wird.

14. Trainingspuppe (20) nach Anspruch 8, **dadurch gekennzeichnet, dass** sie ferner Einrichtungen zur Kontrolle der Freisetzung des CO₂ umfasst, die es ermöglichen, die Zugabe von CO₂ in das verformbare Luftreservoir (2) und die Bildung des Luft/CO₂-Gemisches im Innenvolumen (3) des verformbaren Luftreservoirs (2) zu kontrollieren.

15. Verwendung eines künstlichen Thorax (1) nach einem der Ansprüche 1 bis 7 oder einer Trainingspuppe (20) nach einem der Ansprüche 8 bis 14 bei einer Trainings-, Demonstrations- oder Simulationssitzung zur kardiopulmonalen Reanimation (CPR) unter Einsatz von aufeinanderfolgenden Thoraxkompressionen, die auf den künstlichen Thorax (1) oder die Trainingspuppe (20) vorgenommen werden.

## Claims

1. Artificial thorax (1) comprising at least one deformable air reservoir (2) comprising an internal volume (3) containing air and comprising a first orifice (4) in fluidic communication with the internal volume (3), said deformable air reservoir (3) deforming, and at least some of the air leaving the internal volume (3) via the first orifice (4), when a compression action is exerted, directly or indirectly, on said deformable air reservoir (2), **characterized in that** it additionally comprises a CO₂ source (10) containing CO₂, connected fluidically (11) to the internal volume (3) of the deformable air reservoir (2) in such a way as to supply said internal volume (3) with gaseous CO₂.

2. Artificial thorax according to the preceding claim, **characterized in that** it moreover comprises at least one actuator (5) which can be actuated manually by a user and which interacts with said at least one deformable air reservoir (2) in such a way that, when the user exerts a manual compression action on said at least one movable actuator (5), said at least one movable actuator (5) acts, directly or indirectly, on said deformable air reservoir (2) in order to deform the latter.

3. Artificial thorax according to Claim 2, **characterized in that** it moreover comprises at least one elastic compression device (6) and/or at least one elastic return device (7) interacting with said at least one actuator (5) and/or with said deformable air reservoir (2).

4. Artificial thorax according to one of the preceding claims, **characterized in that** the CO₂ source (10) contains CO₂ at a content greater than 5% by volume, preferably at least 50% by volume, preferably exclusively CO₂ (100% by volume).

5. Artificial thorax according to one of the preceding claims, **characterized in that** the CO₂ source (10) is a pressurized gas container, in particular a gas cylinder.

6. Artificial thorax according to one of the preceding claims, **characterized in that** the CO₂ source (10) is arranged in such a way as to supply the internal volume (3) of the deformable air reservoir (2) with gaseous CO₂ so as to obtain an air/CO₂ mixture in said internal volume (3).

7. Artificial thorax according to Claim 3, **characterized in that** said at least one elastic compression device (6) and/or said at least one elastic return device (7) are arranged inside the internal volume (3) of the deformable air reservoir (2) .

8. Manikin (20) for training, demonstration or simulation, comprising an artificial thorax (1) according to one of the preceding claims, said manikin (20) preferably having a human form, especially with torso (24) and head (23).

9. Manikin (20) according to Claim 8, **characterized in that** it comprises a mouth (25) with a gas orifice (22) connected fluidically to the first orifice (4) of the deformable air reservoir (2).

10. Manikin (20) according to Claim 8, **characterized in that** it additionally comprises means for monitoring the CO₂, which comprise means (33) for measuring the CO₂ content and signal processing means (34).

11. Manikin (20) according to Claim 10, **characterized in that** the means (33) for measuring the CO₂ content are designed and/or configured to carry out CO₂ concentration measurements in the gas arriving from the deformable air reservoir (2) and to deliver one or more CO₂ content measurement signals to the signal processing means (34), and the means (33) for measuring the CO₂ content preferably comprise a CO2 sensor.

12. Manikin (20) according to Claim 8, **characterized in that** it additionally comprises display means configured to display one or more information items, data items, graphical representations, in particular CO₂ values or curves.

13. Manikin (20) according to Claims 11 and 12, **characterized in that**:
- the signal processing means (34) are configured to process the one or more CO₂ content measurement signals delivered by the means (33) for measuring the CO₂ content, and
- the display means are configured to display at least one CO₂ concentration determined and delivered by the signal processing means (34), after processing of one or more CO₂ content measurement signals delivered by the means (33) for measuring the CO₂ content.

14. Manikin (20) according to Claim 8, **characterized in that** it additionally comprises CO₂ release control means for controlling the addition of CO₂ in the deformable air reservoir (2) and the formation of the air/CO₂ mixture in the internal volume (3) of the deformable air reservoir (2).

15. Use of an artificial thorax (1) according to one of Claims 1 to 7 or of a manikin (20) according to one of Claims 8 to 14 during a cardiopulmonary resuscitation (CPR) training session, demonstration or simulation with use of successive chest compressions applied to said artificial thorax (1) or manikin (20).
